(19) Europäisches Patentamt

European Patent Office

Office européen des brevets

(11) **EP 2 122 388 B1**

(12) **FASCICULE DE BREVET EUROPEEN**

(45) Date de publication et mention de la délivrance du brevet:
**14.09.2016 Bulletin 2016/37**

(21) Numéro de dépôt: **08717802.6**

(22) Date de dépôt: **14.03.2008**

(51) Int Cl.:
*G01S 13/91* *(2006.01)*   *G01S 13/68* *(2006.01)*

(86) Numéro de dépôt international:
**PCT/EP2008/053058**

(87) Numéro de publication internationale:
**WO 2008/113750 (25.09.2008 Gazette 2008/39)**

(54) **DISPOSITIF ET PROCEDE DE LOCALISATION D'UN MOBILE A L'APPROCHE D'UNE SURFACE REFLECHISSANT LES ONDES ELECTROMAGNETIQUES**

EINRICHTUNG UND VERFAHREN ZUM LOKALISIEREN EINER MOBILEN EINRICHTUNG, DIE SICH EINER ELEKTROMAGNETISCHE WELLEN REFLEKTIERENDEN OBERFLÄCHE NÄHERT

DEVICE AND METHOD FOR LOCATING A MOBILE APPROACHING A SURFACE REFLECTING ELECTROMAGNETIC WAVES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **16.03.2007  FR 0701926**

(43) Date de publication de la demande:
**25.11.2009  Bulletin 2009/48**

(73) Titulaire: **THALES**
**92400 Courbevoie (FR)**

(72) Inventeurs:
• **CORNIC, Pascal**
**F-29290 Saint Renan (FR)**
• **BARRAUX, Eric**
**F-29200 Brest (FR)**
• **GARREC, Patrick**
**F-33700 Merignac (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A- 2 690 755   FR-A- 2 878 336**
**US-A- 3 742 505   US-A- 5 812 091**

**Description**

La présente invention concerne un dispositif et un procédé de localisation d'un mobile à l'approche d'une surface réfléchissant les ondes électromagnétiques. L'invention peut être utilisée par exemple afin de déterminer la position d'un aéronef en phase finale d'atterrissage pour un dispositif de guidage.

L'atterrissage d'un aéronef est une phase très délicate au cours de laquelle, la moindre erreur de positionnement peut entraîner des dégâts important sur l'aéronef. Notamment un guidage manuel au cours de la phase d'atterrissage s'avère hasardeux à cause des difficultés d'appréciation de la distance de l'aéronef, de la présentation de l'aéronef ainsi que de sa vitesse réelle. Ainsi plusieurs systèmes de guidage automatiques ont été mis en oeuvre afin de guider des aéronefs au cours d'une phase d'atterrissage. Le guidage automatique d'un aéronef passe par une détermination précise de la position courante de l'aéronef afin de corriger éventuellement automatiquement sa trajectoire pour l'aligner correctement avec une piste d'atterrissage par exemple. Cette détermination de la position courante de l'aéronef peut être effectuée à l'aide de différents systèmes.

Parmi ces systèmes, les plus connus sont les systèmes ILS signifiant Instrument Landing System en langage anglo-saxon. Les systèmes ILS sont des systèmes d'approche aux instruments pour les aéronefs qui en sont équipés. Le système ILS permet d'indiquer au pilote les manoeuvres à effectuer pour réussir sont atterrissage. Ces systèmes nécessitent donc une instrumentation spécifique à bord de l'aéronef ainsi que des systèmes de détection et de guidage au sol. Les systèmes ILS sont divisés en trois catégories : la catégorie un, la catégorie deux et la catégorie trois. Parmi ces trois catégories, seule la catégorie trois peut être exploitée par tous les temps.

Un autre système de guidage employé sur les aéroports est le MLS, signifiant Microwave Landing System en langage anglo-saxon. Le MLS est un système d'atterrissage hyperfréquence. Il permet d'effectuer un guidage de précision pour un atterrissage, quelles que soient les conditions météorologiques. Les systèmes ILS et MLS sont des équipements très lourds aussi bien au sol qu'à bord de l'aéronef. S'ils sont adaptés à des installations aéroportuaires de grande envergure, ils s'avèrent totalement inenvisageable d'équiper de petits aérodromes avec de tels équipements. De plus les aéronefs légers ne peuvent embarquer l'équipement nécessaire à la mise en oeuvre de ces systèmes autant pour des raisons de coût que de manque de place.

Hormis ces moyens classiques principalement utilisés par l'aviation civile commerciale, d'autres solutions peuvent être envisagées.

Une première solution utilise le système GPS ou Global Positionning System, ou encore le système DGPS signifiant Digital Global Positionning System en langage anglo-saxon. Les systèmes GPS ont pour principal inconvénient leur manque de robustesse. En effet, le service GPS n'est pas toujours disponible. Par ailleurs, les performances de localisation par GPS peuvent être dégradées par des réflexions multiples au voisinage du sol.

Une deuxième solution est l'utilisation d'un système LIDAR ou Light Detection And Ranging en langage anglo-saxon. Ce système de localisation, fonctionnant sur le même principe que les radars, utilise des ondes électromagnétiques dans le domaine du visible, voir dans le domaine de l'infrarouge. Ceci le rend donc inopérant lorsque les conditions météorologiques sont défavorables. De plus le faisceau du LIDAR est très étroit, il est donc nécessaire de procéder à un grand nombre de balayages pour détecter une cible. Ceci rend le temps de recherche relativement long dans une phase au cours de laquelle il est important d'accrocher la cible le plus rapidement possible. Cette solution nécessite également un positionnement précis par rapport à la piste d'atterrissage.

Une autre solution consiste à utiliser un radar à ondes millimétriques très directif. Le radar à ondes millimétriques nécessite également une phase de recherche pour la désignation de la cible. Il doit également être positionné de manière précise par rapport à la piste d'atterrissage. De plus, même en utilisant un faisceau radar très étroit, lorsque la cible est très proche du sol, les réflexions des ondes sur le sol se superposent à la réflexion de l'onde émise par le radar sur la cible, rendant la détection peu fiable et peu précise. Cette solution est également très coûteuse et nécessite un répondeur embarqué à bord de l'aéronef. Le répondeur est lui-même coûteux, volumineux, lourd, et consomme beaucoup d'énergie.

Des solutions couramment mises en oeuvres afin de s'affranchir des problèmes de réflexions sur le sol consistent notamment à filtrer, au niveau de l'antenne radar, les signaux réfléchis par le sol en minimisant la contribution de ces signaux par une orientation et une directivité de faisceau de l'antenne radar appropriée.

Le filtrage de tels signaux nécessite des antennes très directives et pointées de façon très précise. Ces antennes mettent en oeuvre des traitements complexes comme des traitements adaptatifs à haute résolution sur le signal reçu. Les traitements adaptatifs nécessitent des moyens de calculs importants tout en étant très sensibles aux hypothèses faîtes sur un modèle de propagation de l'onde à traiter. En particulier, il est nécessaire de faire des hypothèses sur la cohérence ou non des réflexions vis à vis du signal direct, le signal direct étant le signal non réfléchi sur le sol. Ces hypothèses ne sont pas vérifiées dans tous les cas. Ceci rend ces traitements peu robustes et difficiles à mettre en oeuvre.

Une minimisation de la contribution des signaux réfléchis par le sol dans le signal reçu peut être effectuée par un positionnement précis de l'antenne du radar de manière par exemple à placer les trajets réfléchis par le sol dans des creux du diagramme de l'antenne. Cette minimisation peut être effectuée par des antennes réseaux de grande dimension qui réalisent un filtrage spatial approprié permettant d'améliorer le contraste du signal direct par rapport au signal réfléchi tout en préservant un gain suffisant dans la direction du trajet direct. La réduction de l'ouverture du faisceau d'antenne nécessaire à ce type de traitement passe par une augmentation des dimensions de l'antenne. Cependant, les dimensions de l'antenne sont fortement contraintes notamment par son implantation physique. En effet, pour des raisons pratiques et de sécurité, il est impossible de déployer une antenne radar de grandes dimensions en bordure d'une piste d'atterrissage.

Une demande de brevet française FR2690755 décrit notamment un procédé de détection par ondes électromagnétiques consistant à éclairer successivement, à lémission une pluralité de zones élémentqires et à recevoir des signaux échos sur un réseau lacunaire composé de plusieurs capteurs.

Un but de l'invention est notamment de pallier les inconvénients précités. A cet effet, l'invention a pour objet un dispositif et un procédé de localisation d'un mobile à l'approche d'une surface réfléchissant les ondes électromagnétiques.

Le dispositif de localisation peut comporter notamment

- une antenne d'émission ;
- une antenne de réception.

L'antenne d'émission comprend par exemple une ou plusieurs positions d'émission. Chaque position d'émission peut émettre un signal de détection en direction du mobile. L'antenne de réception comprend par exemple au moins une colonne composée d'une ou plusieurs positions de réception. Chaque position de réception peut recevoir un signal ré-émis par le mobile. Une émission du signal de détection est activée sur chaque positions d'émission. Une position d'émission, ayant alors donné lieu à une détection par l'antenne de réception du signal d'énergie maximum ré-émis par le mobile est sélectionnée pour effectuer une poursuite du mobile. Un ou plusieurs signaux d'énergie maximum peuvent être reçus par une ou plusieurs positions de réception. Ces signaux d'énergie maximum peuvent indiquer la détection du mobile. Les signaux d'énergie maximum sont alors préférentiellement utilisés pour localiser le mobile.

Les positions de réception recevant un signal d'énergie maximum sont utilisées pour une localisation angulaire du mobile dans un plan sensiblement parallèle à la surface réfléchissant les ondes électromagnétiques.

L'ensemble des positions de réception sont utilisées pour une localisation angulaire du mobile dans un plan sensiblement perpendiculaire à la surface réfléchissant les ondes électromagnétiques.

L'antenne de réception comporte plusieurs sous-réseaux de réception comprenant des éléments rayonnants. Une position de réception correspond par exemple à la position d'un sous-réseau de réception fixe. Les sous-réseaux de réception peuvent alors être activés successivement.

L'antenne d'émission comporte plusieurs voies d'émission. Une position d'émission correspond par exemple à la position d'une voie d'émission fixe. Les voies d'émission peuvent alors être activées successivement.

L'antenne de réception peut comporter un ou plusieurs sous-réseaux de réception composés d'éléments rayonnants. Le ou les sous-réseaux de réception peuvent se déplacer sur les positions de réception.

Le ou les sous-réseaux de réception peuvent se déplacer continûment.

L'antenne d'émission peut comporter une ou plusieurs voies d'émission se déplaçant sur les positions d'émission.

La ou les voies d'émission peuvent se déplacer continûment.

Les positions de réception sont par exemple espacées en utilisant une loi d'espacement irrégulière.

Les positions de réception sont par exemple espacées en utilisant une loi d'espacement progressive.

L'antenne d'émission et l'antenne de réception peuvent être co-localisées.

Le mobile est par exemple un aéronef.

Le procédé de localisation peut comporter au moins les étapes suivantes :

- une première étape de sélection d'une position d'émission ayant donnée lieu à une détection par l'antenne de réception du signal de niveau maximum ré-émis par le mobile afin d'effectuer une poursuite du mobile ;
- une deuxième étape de localisation de l'aéronef en utilisant un ou plusieurs signaux d'énergie maximum reçus par une ou plusieurs positions de réception.

Une localisation angulaire du mobile dans un plan sensiblement parallèle à la surface réfléchissant les ondes électromagnétiques est effectuée en utilisant un ou plusieurs signaux d'énergie maximum reçus par une ou plusieurs positions de réception.

Une localisation angulaire du mobile dans un plan sensiblement perpendiculaire à la surface réfléchissant les ondes électromagnétiques est effectuée en utilisant les signaux reçus par chaque position de réception.

Le mobile est par exemple un aéronef.

L'invention a notamment pour principaux avantages de donner une bonne précision pour la localisation de l'aéronef en mettant en oeuvre des traitements robustes et simples. L'antenne radar selon l'invention possède avantageusement des dimensions réduites et tolère un positionnement approximatif sans dégradation des résultats de localisation.

D'autres caractéristiques et avantages de l'invention apparaîtront à l'aide de la description qui suit, donnée à titre illustratif et non limitatif, et faite en regard des dessins annexés qui représentent :

- la figure 1 : un exemple d'un dispositif d'aide à l'atterrissage d'un aéronef ;
- la figure 2 : un phénomène de réflexion sur le sol d'une onde émise par un aéronef consécutivement à la réception d'un signal radar ;
- la figure 3 : un diagramme d'interférences d'un signal venant d'une une cible et son image ;
- la figure 4 un schéma de principe d'une antenne radar selon l'invention
- la figure 5a : un premier exemple de réalisation d'un récepteur de l'antenne radar selon l'invention ;
- la figure 5b : un deuxième exemple de réalisation d'un récepteur de l'antenne radar selon l'invention ;
- la figure 6a : les principales étapes du procédé de détection d'un aéronef selon l'invention ;
- la figure 6b : un signal d'interférence reçu au niveau de l'antenne radar selon l'invention ;
- la figure 6c : une vue de dessus du dispositif selon l'invention pour un calcul de positionnement de l'aéronef en azimut ;
- la figure 6d : un échantillonnage du signal d'interférence reçu au niveau de l'antenne radar selon l'invention pour le calcul de la position de l'aéronef en azimut.

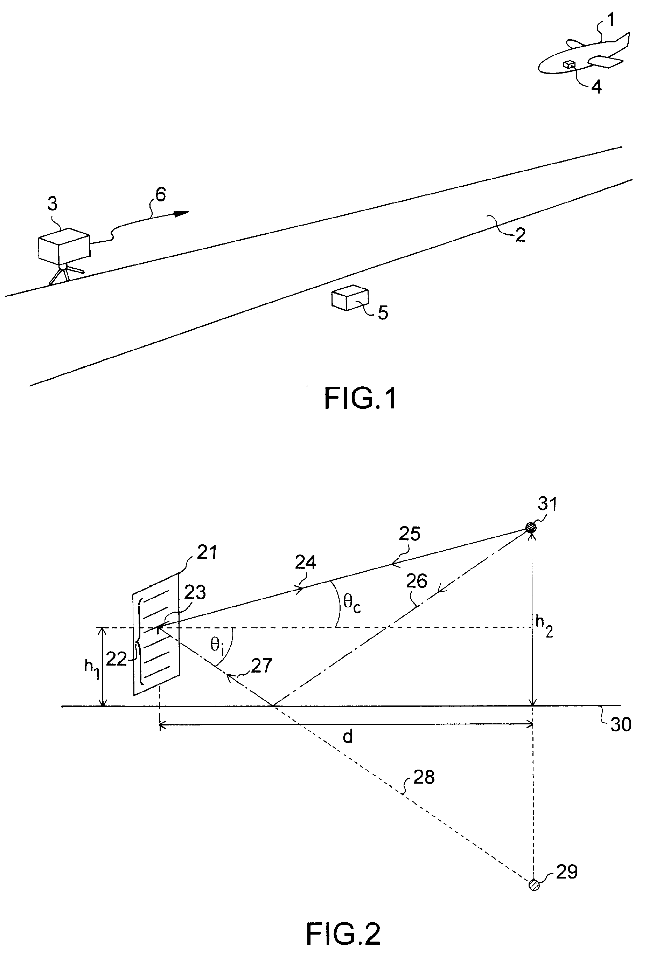

La figure 1 représente un aéronef 1 en phase d'atterrissage sur une piste d'atterrissage 2. L'aéronef 1 peut être guidé par un dispositif comportant notamment un radar 3, une première balise 4 notamment active embarquée à bord de l'aéronef 1, une deuxième balise 5 par exemple passive située en bordure de la piste 2. Ce dispositif de guidage est notamment décrit dans la demande de brevet français n°04 12313.

Le guidage de l'aéronef 1 en phase d'atterrissage nécessite de connaître la position de l'aéronef 1 de manière précise et notamment ses coordonnées en azimut et en élévation. A cette fin, le radar 3 émet un signal 6 de détection vers l'aéronef 1, que l'on nommera aussi cible 1 du radar 3 par la suite. La peau externe de l'aéronef 1 renvoie le signal reçu 6 sous la forme d'un écho. La première balise embarquée 4 sur détection du signal 6 émis par le radar 3 envoie également un signal de réponse en direction du radar 3. Le radar 3 reçoit donc un écho de peau de l'aéronef 1 et un signal venant de la première balise 4 embarquée à bord de l'aéronef 1. Le signal renvoyé par la première balise 4 permet avantageusement une localisation plus précise de l'aéronef que l'écho provenant de la peau de l'aéronef 1.

La présence de la deuxième balise au sol 5 permet au radar 3 d'effectuer des mesures différentielles afin d'annuler le biais de détection. La précision des mesures de positionnement de l'aéronef 1 par le radar 3 se trouve donc avantageusement améliorée par la présence de la deuxième balise 5.

La figure 2 représente, de manière schématique, une antenne radar 21. L'antenne radar 21 est notamment située à une faible hauteur par rapport au sol 30. L'antenne radar 21 comporte P lignes d'éléments rayonnants 22 indépendantes. Les P lignes d'éléments rayonnants 22 sont espacées, de manière régulière ou non, et disposées de manière sensiblement horizontale dans le plan vertical de l'antenne radar 21. Le plan de l'antenne radar 21 est notamment sensiblement perpendiculaire au sol 30. L'antenne radar 21 peut comporter une antenne d'émission et une antenne de réception co-localisées

La figure 2 représente différents signaux émis ou reçus par l'antenne radar 21 fonctionnant en réception de signal.

Afin de simplifier la figure 2, seuls les signaux émis ou reçus par l'une des lignes d'éléments rayonnants 22 de l'antenne 21 sont représentés. La ligne 23 d'éléments rayonnants 55 considérée est située par exemple à une hauteur $h_1$ du sol 30.

La ligne 23 d'éléments rayonnants émet un premier signal de détection 24 en direction d'une cible 31. Cette cible 31 peut être par exemple l'aéronef 1 embarquant la première balise 4. Sur la figure 2, la cible 31 est située à une hauteur $h_2$ du sol 30 et à une distance horizontale d de l'antenne radar 21.

Le premier signal de détection 24 est ensuite ré-émis par la cible 31 sous la forme d'un deuxième signal 25, 26. Le deuxième signal de réponse 25, 26 peut être soit un écho de peau sur l'aéronef 1 soit un signal émis par la première balise 4 en réponse au premier signal de détection 24. Lorsqu'il s'agit d'un écho de peau, la cible 31 est une source passive, si la réponse vient de la première balise 4, la cible 31 est une source active.

Le deuxième signal de réponse 25, 26 comporte plusieurs trajets 25, 26 émis dans des directions différentes. Un premier trajet 25 est un trajet direct 25 partant de la cible 31 et arrivant sur la ligne d'éléments rayonnants 23. Le premier trajet 25 forme par exemple avec l'horizontale un angle $\theta_c$ aussi nommé angle d'élévation de la cible 31 vue de l'antenne radar 23. Le deuxième trajet 26 est émis en direction du sol 30, ou de toute autre surface réfléchissante, par la cible 31. Le deuxième trajet 26 est réfléchi de manière quasi-spéculaire par le sol 30 du fait de la faible altitude de la cible 31. La réflexion du deuxième trajet 26 sur le sol 30 donne notamment lieu à un troisième trajet 27 se dirigeant vers la ligne d'éléments rayonnants 23. Le troisième trajet 27 peut être représenté par le prolongement d'un quatrième trajet 28 d'un troisième signal fictif 27, 28 émis par une image 29 de la source 31. Dans le cas de la figure 2, avec un sol 30 plan et horizontal, l'image 29 est la projection orthogonale de la source 31 par rapport au sol 30. Le troisième trajet 27 forme par exemple avec l'horizontale un angle $\theta_i$ appelé angle d'élévation de l'image 29 vue de l'antenne radar 23.

Le système composé par la cible 31 et son image 29 forme un bipôle cible-image 31, 29. Un quatrième signal 25, 27, reçu par la ligne d'éléments rayonnants 23, comporte donc le premier trajet 25 du deuxième signal 25, 26 émis par la cible 31 et le troisième trajet 27 issu du troisième signal fictif 27, 28 émis par l'image 29 de la cible 31.

Le phénomène de réflexion décrit s'applique également en fonctionnement de l'antenne en émission. En effet premier signal émis 24 peut également comporter plusieurs trajets, dont certains peuvent se réfléchir sur le sol 30. Le phénomène étant similaire, il n'est pas représenté sur la figure 2

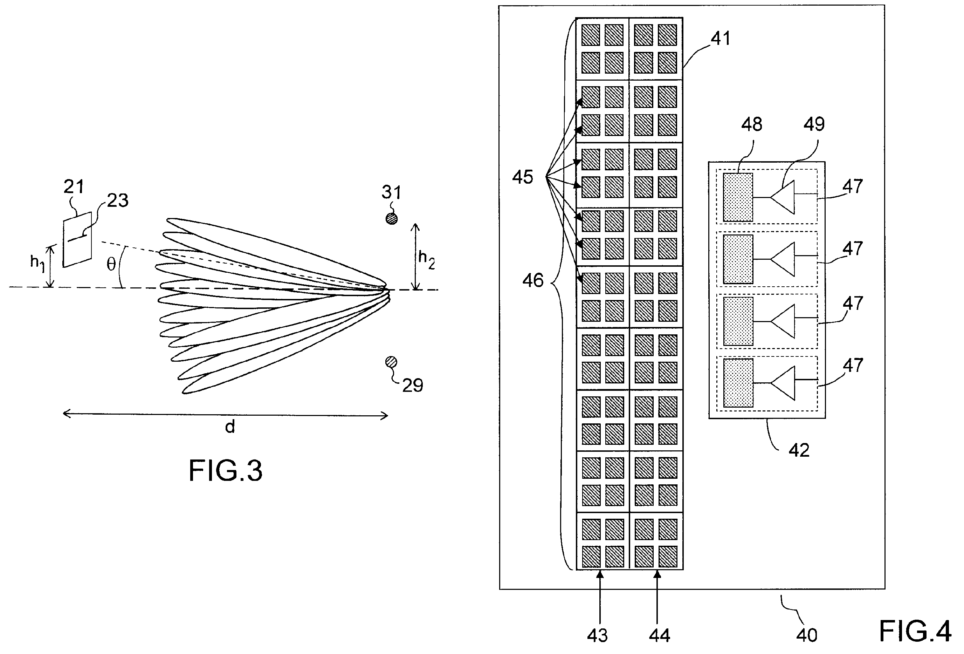

La figure 3 représente un diagramme d'interférence du quatrième signal 25, 27 reçu par l'antenne 21. Le quatrième signal 25, 27 reçu par l'antenne 21, de forme sinusoïdale, provient du bipôle cible-image 31, 29 comme s'il s'agissait d'un cinquième signal émis par un système ponctuel situé par exemple au centre du bipôle cible-image 31, 29.

La cible 31 est par exemple située à une hauteur $h_2$ par rapport au sol 30. Le quatrième signal composite 25, 27 venant de la cible 31 et de son image 29 génère sur l'antenne radar 21 une figure d'interférométrie dont la fréquence est $2h_2/\lambda d$, exprimée en $m^{-1}$ où m est employé pour mètres, $\lambda$ étant la longueur d'onde du quatrième signal 25, 27 reçu par l'antenne radar 21. La fréquence de la figure d'interférométrie est donc indépendante de la valeur du coefficient de réflexion du deuxième trajet 26 du deuxième signal 25, 26 sur le sol 30.

Les grandeurs physiques caractérisant le diagramme d'interférence à un instant donné sont les suivantes :

- d la distance projetée au sol 30 entre la cible 31 et l'antenne radar 21 ;
- $\theta$ : l'angle de visée de la ligne d'éléments rayonnants 23 vers le bipôle cible-image 31, 29 par rapport au plan horizontal du sol 30 ;
- $h_1$ : la hauteur par rapport au sol 30 de la ligne d'éléments rayonnants considérée 23 sur l'antenne 21 ;
- $h_2$ : la hauteur de la cible par rapport au sol 30.

Le diagramme d'interférence en amplitude résultant de la modélisation du cinquième signal émis par le bipôle cible-image 31, 29 s'exprime, à une constante multiplicative près, par une équation de la forme :

$$|I(\theta)|^2=1+\rho^2+2\rho\cos((4\pi h_2\sin(\theta))/\lambda)+\phi) \qquad (1)$$

Où

- $\rho$ représente l'amplitude du coefficient de réflexion sur le sol,
- $\phi$ est un déphasage entre le troisième trajet 27 incident et le premier trajet 25 ré-émis par la cible 31,
- $\lambda$ est la longueur d'onde du premier signal 24 émis par l'antenne 21.

Etant donné que l'antenne radar 21 se trouve proche du sol 30 et que la cible 31 est en phase d'atterrissage, la cible 31 se trouve également proche du sol 30. La hauteur $h_2$ par rapport au sol 30 est donc faible devant la distance d. On peut donc considérer que l'on a de faibles valeurs pour l'angle $\theta$. Ceci permet donc de simplifier l'équation (1) afin d'obtenir pour l'interférence la formule suivante, en assimilant $\sin(\theta)$ à $\theta$ :

$$|I(\theta)|^2=1+\rho^2+2\rho\cos((4\pi h_2\theta)/\lambda)+\phi) \qquad (2)$$

Si $h_1$ est la hauteur d'une ligne rayonnante 23 de l'antenne 21, pour de faibles valeurs de $\theta$, on a la relation suivante: $h_1=d\times\theta$ (3) Ce qui donne pour l'équation (2) la forme suivante :

$$|I(h_1)|^2= 1+\rho^2+2\rho\cos((4\pi h_2 h_1)/\lambda d)+ \phi) \qquad (4)$$

Cette relation (4) exprime l'allure de la courbe d'interférence en amplitude en fonction de la hauteur $h_1$ du quatrième signal 25, 27 reçu par une ligne d'éléments rayonnants 23 de l'antenne radar 21.

Compte tenu des distances en jeu, l'hypothèse champ lointain est considérée comme vérifiée, ce qui implique que les trajets du troisième signal émis par la cible 31 sont considérés comme parallèles entre eux, de même que les trajets du quatrième signal émis par la cible 31. Cette hypothèse permet de disposer pour la différence de longueur entre la longueur $r_1$ du premier trajet direct 25 et la longueur $r_2$ des trajets réfléchis 26, 27 composés du deuxième trajet 26 et du troisième trajet 27 une bonne approximation qui est :

$$r_2 - r_1 = (2 \times h_1 \times h_2)/d \qquad\qquad (5)$$

La figure 4 représente un schéma de principe d'une antenne radar 40 selon l'invention utilisée par exemple dans un dispositif de guidage d'aéronef en phase d'atterrissage. L'antenne radar 40 est notamment utilisé dans la bande de rayonnement X. L'antenne radar 40 dispose d'une première antenne de réception 41 qui peut être co-localisée avec une deuxième antenne d'émission 42.

L'antenne de réception 41 comporte au moins deux colonnes identiques 43, 44. Chaque colonne 43, 44 comporte N sous-réseaux de réception 46 d'éléments rayonnants 45. Les sous-réseaux de réception 46 sont par exemple repartis régulièrement sur toute la hauteur de l'antenne de réception 41. Les sous-réseaux de réception 46 sont des voies de réception de l'antenne de réception 41. Chaque sous-réseau de réception 46 possède notamment une ouverture de 20° en azimut et de 20° en élévation. Cette ouverture est suffisante pour couvrir le domaine dans lequel l'aéronef 1 évolue pendant la phase d'atterrissage, nommé domaine d'intérêt. Chaque sous-réseau de réception 46 couvre notamment en élévation +15° au-dessus du sol 30 et -5° en dessous du sol 30 afin de couvrir une éventuelle déclivité de la piste d'atterrissage 2. Les sous-réseaux de réception 46 peuvent être par exemple réalisés avec des circuits imprimés.

L'antenne d'émission 42 comporte notamment M voies d'émission ou sources d'émission 47 pouvant être identiques. Sur la figure 4, quatre voies d'émission 47 sont représentées à titre d'exemple. Chaque source d'émission 47 comporte notamment un sous-réseau d'éléments rayonnants d'émission 48. Chaque sous-réseau d'émission 48 permet d'émettre un premier signal de détection 24 notamment en direction de l'aéronef 1 à localiser. Un générateur de forme d'onde, non représenté sur la figure 4, génère le premier signal de détection 24 émis. Le générateur de forme d'onde peut être réalisé au moyen d'un oscillateur local commandé en fréquence. Chaque source 47 comporte également un amplificateur 49 afin d'amplifier le signal de détection généré par le générateur de forme d'onde. Le premier signal de détection 24 émis par chaque source 47 couvre par exemple un domaine de 10° en élévation et de 20° en azimut.

Le domaine éclairé par l'antenne d'émission 40 est limité uniquement par l'ouverture d'une antenne élémentaire composée par exemple d'une ligne d'éléments rayonnants 47. L'antenne radar 40 selon l'invention a donc avantageusement des capacités de veille dans un domaine angulaire étendu.

Une ou plusieurs sources complémentaires peuvent être utilisées visant vers le haut afin de couvrir des sites plus élevés si nécessaire.

On cherche à l'aide de l'antenne radar 40 selon l'invention à détecter, dans un premier temps, une cible 31 en phase d'atterrissage sur la piste 2. Chaque source 47 est par exemple activée successivement afin de détecter la cible 31. Une fois la cible 31 détectée, la source 47 ayant permis la détection de la cible 31 avec un signal de niveau maximum est utilisée ensuite pour la localisation précise de la cible 31. Lorsqu'une première détection de la cible 31 est réalisée, l'antenne radar 40 selon l'invention permet d'effectuer une poursuite de la cible 31 et de déterminer ses positions successives selon le même principe que celui utilisé pour la détection.

En phase de détection et en phase de poursuite de la cible 31, on choisit un ou plusieurs sous-réseaux de réception 46 recevant un maximum d'énergie. Le choix d'un ou plusieurs sous-réseaux de réception 46 est réalisé en comparant l'énergie reçue par les différents sous-réseaux de réception 46. Cette comparaison est effectuée soit en réalisant une commutation séquentielle des différents sous-réseaux de réception 46, soit en utilisant de manière simultanée les différents sous-réseaux de réception 46. La commutation des sous-réseaux de réception 46 permet un déplacement du centre de phase sur la hauteur de l'antenne de réception 41. Le déplacement du centre de phase permet de sélectionner un ou plusieurs des sous-réseaux de réception 46 recevant un signal d'énergie maximum. Le signal d'énergie maximum reçu sur un ou plusieurs sous-réseaux de réception 46 résulte d'une quasi-égalité de phase entre le premier trajet direct 25 et le deuxième trajet réfléchi sur le sol 26 en un troisième trajet 27 représentés sur la figure 2 par exemple. L'estimation de l'énergie maximum reçue sur les différents sous-réseaux de réception 46 de l'antenne de réception 41 peut être effectuée pour une bande de fréquence prédéfinie correspondant notamment à la fréquence de l'antenne d'émission 42 ou de la première balise embarquée 4.

La détection d'un signal en présence d'un effet image est donc favorisée par ce principe d'utilisation de l'antenne radar 40 selon l'invention. De plus en phase de poursuite, la détection de la cible 31 est maintenue en permanence en sélectionnant un ou plusieurs sous-réseaux de réception 46 recevant un signal d'énergie maximum, ce qui permet d'éviter des creux de détection usuellement constatés avec des radars classiques en présence de réflexion sur le sol ou sur tout autre surface possédant un pouvoir de réflexion des ondes électromagnétiques.

En effet, dans le cas où le quatrième signal 25, 27 provient d'une première balise 4 active embarquée à bord de l'aéronef 1, le terme $I(h_1)$ de la relation (4) intervient comme un terme multiplicatif dans un bilan de portée de l'antenne radar 40. Si $h_1 \geq \lambda d/4h_2$ et si le pas d'échantillonnage $\Delta$ moyen est suffisamment fin alors au moins un des sous-réseaux de réception 46 reçoit un signal dont l'amplitude est multipliée par $1+\rho^2+2\rho$, du fait de la réflexion du quatrième signal 25, 27 venant de la cible 31 sur le sol 30. Ceci équivaut donc par exemple à un gain sur le bilan de portée de l'antenne radar 40 de l'ordre de 6 db, pour un quatrième signal 25, 27 venant de la première balise embarquée 4, lorsque le coefficient de réflexion vaut un. Dans ce cas, le bilan de portée obtenu sur la ligne d'éléments rayonnants 23 recevant un signal d'amplitude maximum est équivalent à celui qui serait obtenu hors réflexion sur une ligne d'éléments rayonnants environ quatre fois plus grande.

Par ailleurs, si l'on considère le bilan de portée radar sur un quatrième signal 25, 27 provenant d'un écho de peau de l'aéronef 1, sous l'hypothèse que les antennes d'émission 42 et de réception 42 sont co-localisées, les trajets des signaux étant alors identiques à l'aller et au retour, le terme $I(h_1)$ de la relation (4) intervient alors au carré dans le bilan de portée du radar. Dans ce cas, le bilan de portée obtenu sur le sous-réseau de réception 46 qui reçoit le signal d'amplitude maximale est équivalent à celui qui serait obtenu hors réflexions sur le sol 30 pour une antenne de dimension verticale jusqu'à seize fois plus importante que la dimension verticale de la ligne d'éléments rayonnants 23. Avantageusement, même si le coefficient de réflexion est inférieur à un, et même si l'échantillonnage n'est pas effectué rigoureusement sur un maximum d'amplitude, le gain obtenu sur le bilan de portée reste important et la sélection des lignes d'éléments rayonnants recevant le maximum de signal permet d'éviter des pertes de détection liées aux interférences destructives entre les signaux provenant de la cible 31 et de son image 29 représentés sur la figure 2.

Dans un autre mode de réalisation, l'antenne d'émission 42 selon l'invention peut comporter une ou plusieurs voies d'émission 47 se déplaçant verticalement sur le plan de l'antenne d'émission 47. Parmi les positions successives de la ou des voies d'émission 47, la position d'une voie d'émission ou position d'émission 47 donnant lieu à une détection de l'aéronef 1 est sélectionnée afin d'assurer la poursuite de l'aéronef 1. La ou les voies d'émission restant alors positionnées sur la position ayant donné lieu à la détection.

De même l'antenne de réception 41 peut comporter une ou plusieurs lignes de sous-réseaux 46 d'éléments rayonnant 55 de réception se déplaçant verticalement sur le plan de l'antenne de réception 41. La position de la ou des lignes de sous-réseaux de réception 46 donnant le maximum d'énergie étant alors préférentiellement choisie afin de déterminer précisément la position de la cible 31. Le centre de phase du signal reçu étant alors sur la position de réception 46 recevant un signal d'énergie maximum.

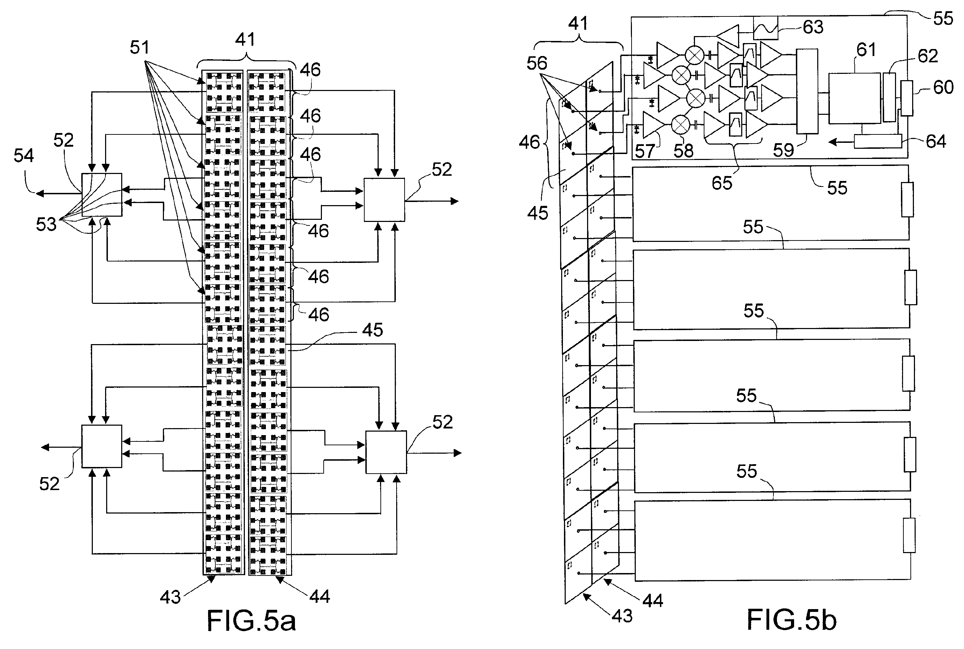

Les figures 5a et 5b représentent deux variantes de réalisation possible de l'antenne de réception 41 de l'antenne radar 40 selon l'invention.

L'antenne de réception 41 représentée sur la figure 5a comporte notamment deux colonnes 43, 44 ayant chacune par exemple douze sous-réseaux de réception 46 d'éléments rayonnants 45. Les sorties 51 des sous-réseaux de réception 46 sont par exemple commutées au niveau hyperfréquence par quatre commutateurs 52 hyperfréquence comportant chacun six entrées 53 et une sortie 54.

L'antenne de réception 41 représentée sur la figure 5b comporte notamment deux colonnes 43, 44 ayant chacune par exemple six sous-réseaux de réception 46 d'éléments rayonnants 45. Chaque sous-réseau de réception 46 est associé à un récepteur 55. Les récepteurs 55 sont habituellement utilisés dans des antennes réseaux. Chaque récepteur 55 peut comporter quatre entrées 56 correspondant à une sortie de chaque élément rayonnant 45 d'un sous-réseau de réception 46. Chaque récepteur 55 peut comporter quatre voies de réception correspondant chacune à une entrée 56. Chaque voie de réception comporte notamment un amplificateur à faible bruit 57 afin d'optimiser le facteur de bruit du quatrième signal reçu 25, 27. Chaque récepteur 55 est relié avec un oscillateur local 63 fournissant notamment un signal à l'antenne d'émission 42 non représentée sur la figure 5b. Le quatrième signal reçu 25, 27, une fois l'optimisation du facteur de bruit effectuée, passe par un mélangeur 58 qui mélange le signal reçu avec le signal émis. Le signal passe ensuite par un ensemble de filtres et d'amplificateurs 65. Chaque voie de réception est reliée à un même codeur analogique 59 qui permet de convertir le signal analogique reçu en un signal numérique. Le quatrième signal reçu 25, 27 est ensuite traité par un composant programmable 61 qui effectue notamment un traitement FFT sur le quatrième signal reçu 25, 27. Une liaison série 62 permet de faire transiter le quatrième signal reçu 25, 27 par un connecteur 60 vers un calculateur non représenté sur la figure 5b qui en assure le traitement. Un composant de régulation 64 est utilisé pour effectuer un filtrage afin d'éviter des perturbations dues à une alimentation électrique non représentée sur la figure 5b. Avec ce type d'antenne de réception, le procédé de détection peut être réalisé en adressant simultanément toutes les voies, ou séquentiellement par commutation au niveau du traitement numérique du quatrième signal reçu 25, 27, en fonction des ressources de traitement disponibles et du temps alloué pour réaliser le traitement du quatrième signal reçu 25, 27.

Dans d'autres modes de réalisation, la sélection des sous-réseaux de réception 46 peut par exemple être réalisée au niveau du récepteur 55 lui-même en analogique ou en numérique, ou bien par un logiciel de traitement.

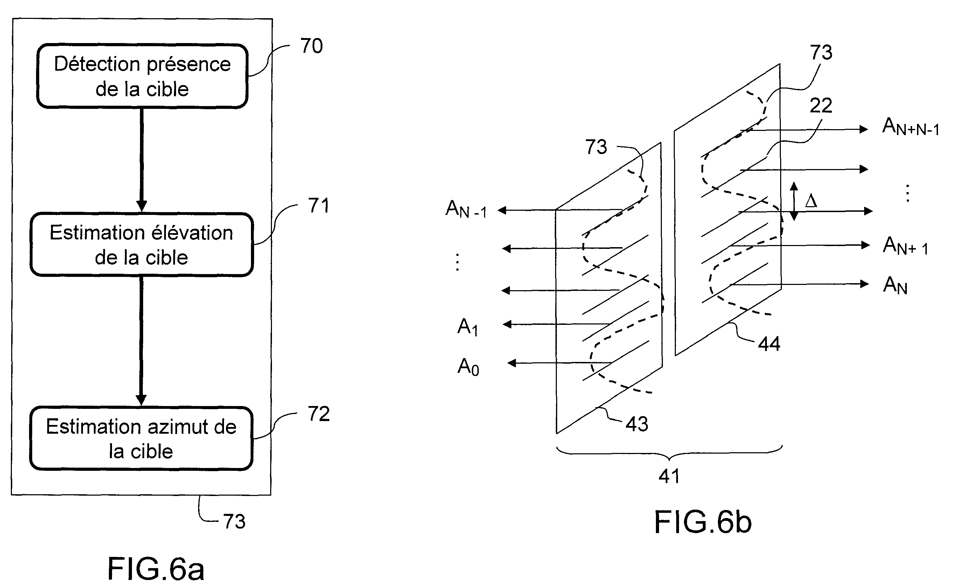

La figure 6a représente les principales étapes d'un procédé de localisation 73 d'un aéronef selon l'invention. Le procédé de localisation 73 d'un aéronef est mis en oeuvre grâce à l'antenne radar 40 selon l'invention telle que représentée sur la figure 4.

Une première étape 70 est la détection de la cible 1 par l'antenne radar 40 selon l'invention. Cette détection de la cible 1 est réalisée en balayant dans un premier temps l'ensemble des sous-réseaux de réception 46 de l'antenne de réception 41 comme précédemment décrit. Ensuite le ou les sous-réseaux de réception 46 recevant un signal d'amplitude maximum assurent la détection.

Une deuxième étape 71 du procédé de localisation 73 d'un aéronef est l'estimation de l'élévation de la cible 31. Dans la suite, un exemple de méthode d'estimation de l'élévation de la cible 31 est présenté.

Au préalable, une estimation du coefficient de réflexion du quatrième signal reçu 25, 27 sur le sol est par exemple réalisé.

Si les réflexions sur le sol 30 sont négligeables, la localisation de la cible 31 en élévation est effectuée par exemple au moyen d'un traitement classique d'écartométrie de type monopulse en réception de signal. On peut dans ce cas utiliser des sources d'émission d'un signal de détection pointées vers le haut.

Si l'on est en présence de réflexions sur le sol 30 importantes, un calcul de la fréquence de la modulation d'amplitude du quatrième signal composite reçu 25, 27 sur la hauteur de l'antenne de réception 41 peut être effectué. Le calcul de la fréquence permet de déduire l'élévation de la cible 31 comme décrit ci-après. Le calcul est effectué au moyen d'un échantillonnage spatial de l'amplitude du signal d'interférence 73 reçu sur la hauteur de l'antenne de réception 41 comme représenté figure 6b. Chaque position d'échantillonnage $A_0$, $A_1$, ..., $A_{N-1}$, $A_N$, $A_{N+1}$, ..., $A_{N+N-1}$ correspond à une ligne d'éléments rayonnants 22 indépendants, de l'antenne de réception 41. Chaque ligne d'éléments rayonnants 22 correspond à un sous-réseaux de réception 46 tel que représenté sur la figure 4. La différence de hauteur $\Delta$ entre deux positions d'échantillonnage consécutives est soit :

• constante et suffisamment petite devant la fréquence du quatrième signal composite reçu 25, 27 ;
• non constante.

Un échantillonnage effectué de manière non constante est par exemple réalisé lorsque l'on souhaite étendre le domaine de non-ambiguïté d'une mesure de l'élévation. La mesure de l'élévation devient ambiguë dès que le déphasage de la sinusoïde de la modulation d'amplitude du quatrième signal reçu 25, 27 est supérieur à n entre deux lignes d'éléments rayonnants 22 contiguës dans le plan vertical de l'antenne de réception 41.

Lorsque l'on prend $\theta_1$ l'angle entre le sol 30 et une ligne reliant la position au sol de l'antenne 21 et la position de la cible 31, pour de faibles valeurs de $\theta_1$, on a $h_2 = d \times \theta_1$. En utilisant la relation (4), le déphasage entre deux lignes d'éléments rayonnants 22 successives, dont les centres de phases sont distants entre eux de $\Delta$, est égal à $4\pi\Delta\theta_1/\lambda$. Ainsi, dès que $\theta_1 > \lambda/4\Delta$ la mesure de l'élévation est ambiguë. Par exemple, si deux lignes d'éléments rayonnants 22 sont jointives, $\Delta$ est alors égal à la hauteur d'une des deux lignes d'éléments rayonnants 22 d'ouverture $\alpha = \lambda/\Delta$. Dans ce cas, la mesure de l'élévation est ambiguë dès que $\theta_1 > \alpha/4$. Notamment pour $\alpha = 20°$, $\theta_1$ est ambigu lorsqu'il vaut 5°.

De manière générale, lorsque $\theta_1 = \lambda/4\Delta + k\pi$ tous les échantillons prennent la même valeur. La modulation d'amplitude n'est alors pas visible sur les positions d'échantillonnage $S_0$, $S_1$, ..., $S_{N-1}$, $S_N$, $S_{N+1}$, ..., $S_{N+N-1}$

Pour éviter ce problème d'ambiguïté, on peut réaliser un échantillonnage sur des positions $S_0$, $S_1$, ..., $S_{N-1}$, $S_N$, $S_{N+1}$, ..., $S_{N+N-1}$ de manière non périodique. Un tel échantillonnage peut être effectué de manière à ce que le déphasage entre deux échantillons successifs varie sur la hauteur de l'antenne, et de manière à ce que cette variation soit différente en fonction du rang d'ambiguïté I de la fréquence de modulation par rapport à la fréquence d'échantillonnage.

Par exemple, on peut utiliser une loi d'espacement progressive d'un bout de l'antenne 41 à l'autre, par exemple du type : $\Delta$, $\Delta+\varepsilon$, $\Delta+2\varepsilon$, $\Delta+3\varepsilon$, $\Delta+4\varepsilon$, $\Delta+4\varepsilon$, $\Delta+5\varepsilon$,... $\varepsilon$ étant très petit devant $\Delta$. De cette façon, les déphasages obtenus entre deux échantillons successifs sont respectivement : $I\pi$, $I\pi+4\pi\varepsilon\theta_1/\lambda$, $I\pi+8\pi\varepsilon\theta_1/\lambda$, $I\pi+12\pi\varepsilon\theta_1/\lambda$, $I\pi+16\pi\varepsilon\theta_1/\lambda$, $I\pi+20\pi\varepsilon\theta_1/\lambda$, ... Cet échantillonnage permet de calculer I et $\theta_1$ à partir des échantillons du signal reçus et d'en déduire l'angle d'élévation sans ambiguïté.

Le rapport entre la hauteur $h_2$ de la cible 31 par rapport au sol 30 et la distance d projetée au sol entre l'antenne du radar 40 et la cible 31 peut s'exprimer en fonction de la fréquence f du signal d'interférence calculée selon la relation suivante :

$$\mathrm{h}_2/d = \lambda f/2 \qquad\qquad (6)$$

où $\lambda$, est la longueur d'onde du signal émis.

L'estimation de l'élévation peut être effectuée par un calcul de corrélation directe telle que décrit ci-après.

Dans un premier temps, une sommation non cohérente de l'amplitude A du signal 73 reçu sur deux lignes d'éléments rayonnants 22 de même rang k, k variant de 0 à (N-1), est effectuée. Deux lignes d'éléments rayonnants 22 de même rang K sont des lignes appartenant chacune sur une des colonnes 43, 44 de l'antenne de réception 41, situées à une même hauteur par rapport au sol dans le plan de l'antenne de réception 41. Pour chaque rang k, on obtient donc :

$$Sb_k = \left|A_k\right|^2 + \left|A_{N+k}\right|^2 \qquad\qquad (7)$$

En présence d'un sol plan on s'attend à trouver sur une position d'échantillonnage $S_k$ correspondant à une

ligne d'éléments rayonnants 22 située à une hauteur x du sol, et pour une hauteur $h_2$ de la balise 4 embarquée par la cible 31, un niveau d'amplitude S(x) de la forme :

$$|S(x)|^2 = 1 + \rho^2 - 2 * \rho * \cos(4 * \pi * h_2 * x / (\lambda * d)) \qquad (8)$$

Le niveau S(x) correspond au niveau d'amplitude défini par la relation (4) en sachant que la phase $\phi$ du quatrième signal reçu 25, 27 vaut n du fait du traitement en polarisation horizontale du quatrième signal reçu 25, 27.

On discrétise l'angle $\theta_1$ en Ne angles $\theta_1$ d'indice i variant de 1 à Ne, avec un pas de discrétisation $\Delta_\theta$. Un niveau attendu du quatrième signal reçu 25, 27 sur la ligne d'éléments rayonnants 22 de rang k située à une hauteur $X_k$ du sol peut alors s'exprimer sous la forme :

$$|S_{\theta_i}(k)|^2 = 1 + \rho^2 - 2 * \rho * \cos(4 * \pi * x_k * \theta_i / \lambda) \qquad (9)$$

Ensuite, on utilise une fonction de corrélation $Correl(\theta_i)$ définie comme suit :

$$Correl(\theta_i) = \left( \sum_{k=0}^{k=(N/2)-1} S_{\theta_i}(k) * Sb_k \right) / \left( \sqrt{\sum_{k=0}^{k=(N/2)-1} S_{\theta_i}^2(k)} * \sqrt{\sum_{k=0}^{k=(N/2)-1} Sb_k^2} \right) \qquad (10)$$

On va donc chercher à maximiser la fonction $Correl(\theta_i)$ afin d'obtenir la corrélation maximum entre les fonctions $S_{\theta i}(k)$ et l'amplitude du quatrième signal reçu 25, 27 réellement mesurée sur les différentes lignes d'éléments rayonnants 22 de l'antenne de réception 41.

On en déduit ensuite une estimation de $h_2/d$ à l'aide de l'indice i de l'angle $\theta_1$ pour lequel la fonction $Correl(\theta_i)$ est maximum de la manière suivante :

$$h_2/d = \Delta_\theta * j \qquad (11)$$

La hauteur d'élévation peut ensuite être déterminée pour un sol 30 non plan et non horizontal à partir :

- d'un point de réflexion R du deuxième trajet 26 ré-émis par la cible 31 vers le sol 30 sur ce dernier,
- de la hauteur d'élévation déterminée pour un sol 30 plan et horizontal, L'expression de l'égalité entre les angles d'incidence du rayon ré-émis par la cible vers le sol 26 et celui réfléchi par le sol 30 avec le plan tangent au sol au point de réflexion R permettant d'obtenir les coordonnées $(X_R, Z_R)$ du point de réflexion R ainsi que l'angle $\alpha_R$ entre le plan tangent au sol au point R et l'horizontale à partir de la fonction de coût suivante :

$$|C(r)| = \left| \frac{h_1 - z_R + x_R \times \alpha_R}{x_R} - \frac{h_2}{d - x_R} \right| \qquad (12)$$

où $h_1$ représente la hauteur par rapport au sol 30 de l'antenne de réception 41, $h_2$ représente l'estimation de la hauteur d'élévation calculée dans le cas d'un sol 30 plan et horizontal. Les valeurs $(X_R, Z_R, \alpha_R)$ minimisant la fonction $|C(r)|$ sont les coordonnées du point de réflexion R.

Pour finir, l'obtention de la valeur de l'angle $\alpha_R$ entre le plan tangent en R au sol 30 et l'horizontale permet de corriger la hauteur de la cible $h_2$ par rapport au plan tangent en une valeur $H_2$ de la manière suivante : $H_2 = h_2 + z_R + (d - x_R) \times \alpha_R$, $h_2$ étant la hauteur calculée de la cible 31 par rapport au sol dans le cas d'un sol 30 plan et horizontal et d étant la distance projetée au sol 30 de la cible 31 à l'antenne de réception 41.

L'ambiguïté sur l'estimation de la hauteur de la cible est levée par l'utilisation d'un échantillonnage non constant sur la hauteur de l'antenne radar 40. De plus il est possible d'utiliser plusieurs fréquences d'émission différentes pour améliorer la mesure de localisation de manière générale et plus particulièrement, la mesure de l'élévation.

On obtient ainsi une mesure de l'élévation précise de manière simple en prenant en compte le phénomène de réflexion sur le sol ou tout autre surface réfléchissante s'il y a lieu.

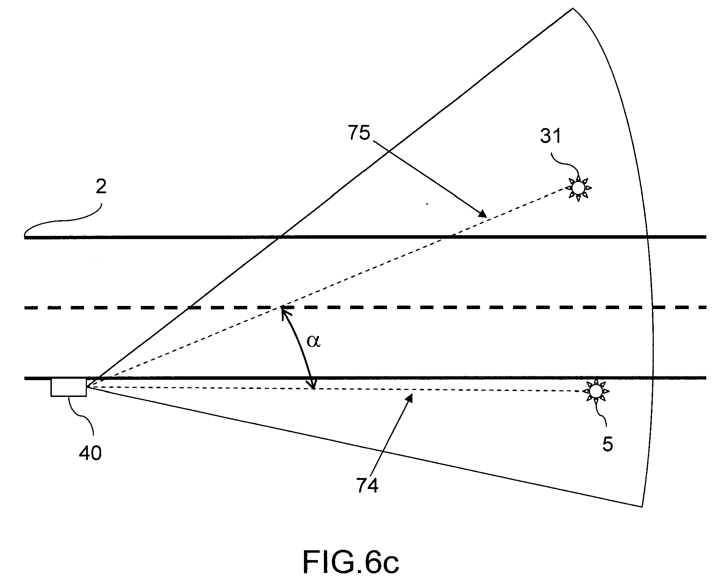

Une troisième étape 72 du procédé de localisation 73 est l'estimation de l'angle d'azimut de la cible 31 par écartométrie monopulse de phase. Le calcul d'écartométrie est effectué en déterminant un angle $\alpha$, représenté sur la figure 6c, entre une première droite 74 reliant l'antenne radar 40 et la deuxième balise 5 et une deuxième droite 75 reliant l'antenne radar 40 avec la première balise embarquée 4 tel que représenté sur la figure 6c.

Le calcul d'écartométrie utilise les mesures effectuées par au moins deux sous-réseaux de réception 46 situés chacun sur une colonne 43, 44 de l'antenne de réception 41. Les deux sous-réseaux de réception 46 utilisés sont notamment situés à une même hauteur dans le plan de l'antenne de réception 41, on dit alors qu'ils sont de même rang.

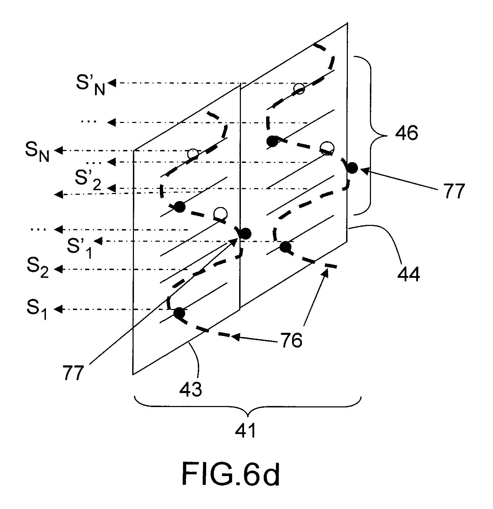

Un échantillonnage du signal de modulation 76 reçu sur l'antenne de réception 41, tel que représenté sur la figure 6d, est effectué sur chaque sous-réseau de réception 46 de chaque colonne 43, 44. On obtient ainsi deux échantillons $(S_1, S_2, ..., S_N)$ et $(S'_1, S'_2, .... S'_N)$ de valeurs du signal de modulation 76. Les valeurs 77 retenues pour le calcul d'écartométrie en azimut sont celles présentant un maximum d'amplitude du signal de modulation. Le calcul d'écartométrie peut ensuite être effectué sur chaque couple de sous-réseaux de réception 46 de même rang à l'aide par exemple d'un opérateur de type monopulse de phase en formant des voies somme $S_i+S'_i$ et différence $S_i-S'_i$, i étant compris entre 1 et N, N étant le nombre de sous-réseaux de réception 46 de l'antenne de réception 41.

Le calcul d'écartométrie peut également dans un autre mode de réalisation être effectué avec une moyenne pondérée de l'écartométrie estimée sur l'ensemble des couples de sous-réseaux de réception 46 de même rang. Une pondération de la moyenne obtenue étant alors effectuée en utilisant le rapport signal à bruit observé pour chacun des couples de sous-réseaux de réception 46 de même rang.

L'antenne du radar 40 et le procédé de localisation 73 selon l'invention peuvent également être utilisés en présence de réflexions sur la mer par exemple. De façon générale, l'invention peut s'appliquer à tout système de communication confronté au problème de réflexions multiples.

On peut également utiliser l'invention en présence de réflexions sur une surface verticale ou non.

La présente invention peut aussi servir à la localisation d'autres types de mobiles comme des bateaux ou des automobiles par exemple.

L'antenne radar 40 selon l'invention et le procédé de localisation 73 de la cible 31 associé constituent avantageusement une alternative aux solutions à antenne réseau dans lesquelles on cherche, en utilisant toutes les sources du réseau, à former un faisceau tel que la cible 31 est vue sous un gain maximum, tandis que l'image 29 est vue sous un gain minimum.

Avantageusement, la précision de mesure en élévation en présence d'effet image est bien meilleure que celle obtenue par une antenne réseau à formation de faisceau par le calcul, de mêmes dimensions physiques.

La détection effectuée en utilisant l'antenne radar 40 selon l'invention possède avantageusement une stabilité de performances dans le domaine de couverture angulaire d'un sous-réseau de réception 46. En effet, il ne peut y avoir d'élargissement du lobe associé ou d'affaiblissement du signal dans certaines directions pouvant biaiser l'estimation de la position angulaire.

En phase de poursuite, la sélection d'un sous-réseau de réception 46 recevant le maximum d'énergie permet d'éviter avantageusement les pertes de cibles dues à la pluralité des trajets du signal émis par la cible 31 en présence du phénomène de réflexions sur le sol 30 du signal ré-émis par la cible 31.

Avantageusement, la commutation séquentielle des différents sous-réseaux de réception 46 sur la hauteur de l'antenne permet une estimation précise de l'élévation de la cible 31 en phase de poursuite, tout en limitant avantageusement :

- le nombre de voies de réception du dispositif de localisation
- le débit d'informations entre la tête du radar et le récepteur
- les traitements associés.

Les traitements du signal mis en oeuvre par l'antenne radar 40 selon l'invention sont avantageusement simple et robustes : il n'est pas nécessaire de mettre en oeuvre des traitements adaptatifs complexes qui sont de plus très sensibles aux hypothèses faîtes sur la nature des réflexions sur le sol notamment.

Un autre avantage du radar selon l'invention est de ne pas nécessiter de connaissance a priori de la position de la cible, ni de pointer en permanence et de façon adaptative un faisceau par balayage électronique.

L'antenne radar 40 selon l'invention possède également l'avantage de permettre une relative indépendance de la précision des résultats obtenus pour la localisation en élévation vis-à-vis d'imprécisions dans l'inclinaison de l'antenne radar 40.

Avantageusement, l'antenne radar 40 selon l'invention peut fonctionner en mode dégradé, lorsque l'une ou l'autre des voies de réception 46 est en panne, l'autre voie peut remplir la fonction de détection et de poursuite de la cible 31. Il est de même possible de réduire intentionnellement le nombre de voies de réception 46.

Un autre avantage du dispositif 40 selon l'invention est qu'il peut être mis en oeuvre sur des antennes à balayage électronique classiques.

## Revendications

1. Dispositif de localisation (40) d'un mobile (1) à l'approche d'une surface (30) sensiblement horizontale réfléchissant les ondes électromagnétiques comportant :

   • une antenne d'émission (42) comprenant au moins deux positions d'émission (47) émettant un signal de détection (24) en direction du mobile (1) ;
   • une antenne de réception (41) comprenant au moins deux colonnes (43, 44) d'au moins deux positions de réception (46), recevant un signal (25, 27) ré-émis par le mobile (1) ;
   • des moyens configurés pour, une émission du signal de détection (24) étant activée sur chaque position d'émission (47), sélectionner une position d'émission (47) ayant donné lieu à une détection par l'antenne de réception (41) du signal (25, 27) d'énergie maximum ré-émis par le mobile (1) pour effectuer une poursuite du mobile (1) ;

   ledit dispositif de localisation (40) étant **caractérisé en ce qu'**il comporte des moyens configurés pour sélectionner et utiliser au moins deux signaux d'énergie maximum (25, 27) reçus par au moins deux positions de réception (46) situées sur au moins deux colonnes différentes, indiquant la détection du mobile (1), pour une localisation angulaire du mobile (1) dans un plan sensiblement parallèle à la surface (30) réfléchissant les ondes électromagnétiques.

2. Dispositif de localisation (40) selon la revendication précédente, **caractérisé en ce que** l'ensemble des positions de réception (46) sont utilisées pour une localisation angulaire du mobile (1) dans un plan sensiblement perpendiculaire à la surface (30) réfléchissant les ondes électromagnétiques.

3. Dispositif de localisation (40) selon l'une quelconque des revendications précédentes, **caractérisé en ce que** l'antenne de réception (41) comportant plusieurs sous-réseaux de réception (46) comprenant des éléments rayonnants (45), une position de réception (46) correspondant à la position (46) d'un sous-réseau de réception (46) fixe, les sous-réseaux de réception (46) sont activés successivement.

4. Dispositif de localisation (40) selon l'une quelconque des revendications précédentes, **caractérisé en ce que** l'antenne d'émission (46) comportant plusieurs voies d'émission (47), une position d'émission (47) correspondant à la position d'une voie d'émission (47) fixe, les voies d'émission (47) sont activées successivement.

5. Dispositif de localisation (40) selon l'une quelconque des revendications 1, 2 et 4, **caractérisé en ce que** l'antenne de réception (41) comporte un ou plusieurs sous-réseaux de réception (56), composés d'éléments rayonnants (55), se déplaçant sur les positions de réception (46).

6. Dispositif de localisation (40) selon la revendication 5, **caractérisé en ce que** le ou les sous-réseaux de réception (56) se déplacent continûment.

7. Dispositif de localisation (40) selon l'une quelconque des revendications 1à 3 et 7, **caractérisé en ce que** l'antenne d'émission (47) comporte une ou plusieurs voies d'émission (47) se déplaçant sur les positions d'émission (47).

8. Dispositif de localisation (40) selon la revendication 7, **caractérisé en ce que** la ou les voies d'émission (47) se déplacent continûment.

9. Dispositif de localisation (40) selon l'une quelconque des revendications précédentes, **caractérisé en ce que** les positions de réception (46) sont espacées en utilisant une loi d'espacement irrégulière.

10. Dispositif de localisation (40) selon l'une quelconque des revendications 1 à 9, **caractérisé en ce que** les positions de réception (46) sont espacées en utilisant une loi d'espacement progressive.

11. Dispositif de localisation (40) selon l'une quelconque des revendications précédentes, **caractérisé en ce que** l'antenne d'émission (42) et l'antenne de réception (41) sont co-localisées.

12. Dispositif de localisation (40) selon l'une quelconque des revendications précédentes, **caractérisé en ce que** le mobile (1) est un aéronef (1).

13. Procédé de localisation (73) d'un mobile (1) proche d'une surface sensiblement horizontale réfléchissant les ondes électromagnétiques par un dispositif de localisation (40) comportant :

• une antenne d'émission (42) comprenant au moins deux positions d'émission (47) émettant un signal de détection (24) en direction du mobile (1) ;
• une antenne de réception (41) comprenant au moins deux colonnes (43, 44) d'au moins deux positions de réception (46), recevant un signal (25, 27) ré-émis par le mobile (1) ;

ledit procédé de localisation comportant au moins une première étape de sélection d'une position d'émission (47) ayant donnée lieu à une détection par l'antenne de réception (41) du signal (25, 27) de niveau maximum ré-émis par le mobile (1) afin d'effectuer une poursuite du mobile (1) ; **caractérisé en ce que** ledit procédé de localisation comporte en outre une deuxième étape de localisation angulaire du mobile (1) dans un plan sensiblement parallèle à la surface (30) réfléchissant les ondes électromagnétiques en sélectionnant et en utilisant au moins deux signaux d'énergie maximum (25, 27) reçus par au moins deux positions de réception (46) situées sur au moins deux colonnes différentes.

14. Procédé de localisation (73) selon la revendication précédente, **caractérisé en ce qu'**une localisation angulaire du mobile (1) dans un plan sensiblement perpendiculaire à la surface (30) réfléchissant les ondes électromagnétiques est effectuée en utilisant les signaux (25, 27) reçus par chaque position de réception (46).

15. Procédé de localisation (73) selon l'une quelconque des revendications 13 ou 14 **caractérisé en ce que** le mobile (1) est un aéronef (1).

**Patentansprüche**

1. Vorrichtung zum Lokalisieren (40) eines mobilen Objekts (1) in Annäherung an eine im Wesentlichen horizontale Oberfläche (30), die elektromagnetische Wellen reflektiert, die Folgendes umfasst:

eine Sendeantenne (42), die wenigstens zwei Sendepositionen (47) umfasst und ein Erkennungssignal (24) in Richtung des mobilen Objekts (1) sendet;
eine Empfangsantenne (41), die wenigstens zwei Spalten (43, 44) von wenigstens zwei Empfangspositionen (46) umfasst, die ein von dem mobilen Objekt (1) erneut gesendetes Signal (25, 27) empfangen;
Mittel, die so konfiguriert sind, dass sie, wenn eine Sendung des Erkennungssignals (24) in jeder Sendeposition (47) aktiviert wird, eine Sendeposition (47) auswählen, die zu einer Erkennung des von dem beweglichen Objekt (1) erneut ausgesendeten Signals (25, 27) mit maximaler Energie durch die Empfangsantenne (41) geführt hat, um das mobile Objekt (1) zu verfolgen;

wobei die Lokalisierungsvorrichtung (40) **dadurch gekennzeichnet ist, dass** sie Mittel umfasst, die zum Auswählen und Benutzen von wenigstens zwei Signalen (25, 27) von maximaler Energie konfiguriert sind, empfangen durch wenigstens zwei Empfangspositionen (46), die sich auf wenigstens zwei unterschiedlichen Spalten befinden und die die Erkennung des beweglichen Objekts (1) anzeigen, für eine winkelmäßige Lokalisierung des beweglichen Objekts (1) in einer Ebene im Wesentlichen parallel zu der die elektromagnetischen Wellen reflektierenden Oberfläche (30).

2. Lokalisierungsvorrichtung (40) nach dem vorherigen Ansprüche, **dadurch gekennzeichnet, dass** alle Empfangspositionen (46) für eine winkelmäßige Lokalisierung des mobilen Objekts (1) in einer Ebene im Wesentlichen lotrecht zu der elektromagnetische Wellen reflektierenden Oberfläche (30) benutzt werden.

3. Lokalisierungsvorrichtung (40) nach einem der vorherigen Ansprüche, **dadurch gekennzeichnet, dass** die Empfangsantenne (41) mehrere Empfangssubnetze (46) umfasst, die Strahlungselemente (45) umfassen, wobei eine Empfangsposition (46) der Position (46) eines festen Empfangssubnetzes (46) entspricht, wobei die Empfangssubnetze (46) aufeinander folgend aktiviert werden.

4. Lokalisierungsvorrichtung (40) nach einem der vorherigen Ansprüche, **dadurch gekennzeichnet, dass** die Sendeantenne (46) mehrere Sendekanäle (47) umfasst, wobei eine Sendeposition (47) der Position eines festen Sendekanals (47) entspricht, wobei die Sendekanäle (47) aufeinander folgend aktiviert werden.

5. Lokalisierungsvorrichtung (40) nach einem der Ansprüche 1, 2 und 4, **dadurch gekennzeichnet, dass** die Empfangsantenne (41) ein oder mehrere Empfangssubnetze (56) umfasst, die aus Strahlungselementen (55) zusammengesetzt sind, die sich auf den Empfangspositionen (46) bewegen.

6. Lokalisierungsvorrichtung (40) nach Anspruch 5, **dadurch gekennzeichnet, dass** sich die ein oder mehreren Empfangssubnetze (56) kontinuierlich bewegen.

7. Lokalisierungsvorrichtung (40) nach einem der Ansprüche 1 bis 3 und 7, **dadurch gekennzeichnet, dass** die Sendeantenne (47) einen oder mehrere Sendekanäle (47) umfasst, die sich auf den Sendepositionen (47) bewegen.

8. Lokalisierungsvorrichtung (40) nach Anspruch 7, **dadurch gekennzeichnet, dass** sich die ein oder mehreren Sendekanäle (47) kontinuierlich bewegen.

9. Lokalisierungsvorrichtung (40) nach einem der vorherigen Ansprüche, **dadurch gekennzeichnet, dass** die Empfangspositionen (46) unter Anwendung eines Beabstandungsgesetzes der unregelmäßigen Beabstandung beabstandet werden.

10. Lokalisierungsvorrichtung (40) nach einem der Ansprüche 1 bis 9, **dadurch gekennzeichnet, dass** die Empfangspositionen (46) unter Anwendung eines Beabstandungsgesetzes der progressiven Beabstandung beabstandet werden.

11. Lokalisierungsvorrichtung (40) nach einem der vorherigen Ansprüche, **dadurch gekennzeichnet, dass** die Sendeantenne (42) und die Empfangsantenne (41) kolokalisiert sind.

12. Lokalisierungsvorrichtung (40) nach einem der vorherigen Ansprüche, **dadurch gekennzeichnet, dass** das bewegliche Objekt (1) ein Flugzeug (1) ist.

13. Verfahren zum Lokalisieren (73) eines beweglichen Objekts (1) in der Nähe einer im Wesentlichen horizontalen Oberfläche, die elektromagnetische Wellen reflektiert, mittels einer Lokalisierungsvorrichtung (40), die Folgendes beinhaltet:

eine Sendeantenne (42), die wenigstens zwei Sendepositionen (47) umfasst, die ein Erkennungssignal (24) in Richtung des mobilen Objekts (1) aussendet;
eine Empfangsantenne (41), die wenigstens zwei Spalten (43, 44) von wenigstens zwei Empfangspositionen (46) umfasst, die ein von dem mobilen Objekt (1) erneut ausgesendetes Signal (25, 27) empfangen;
wobei das Lokalisierungsveifahren wenigstens einen ersten Schritt des Auswählens von einer Sendeposition (47) beinhaltet, die zu einer Erkennung des von dem mobilen Objekt (1) erneut gesendeten Signals (25, 27) mit maximalem Pegel durch die Empfang santenne (4 1) geführt hat, um das mobile Objekt (1) zu verfolgen;

**dadurch gekennzeichnet, dass** das Lokalisierungsverfahren darüber hinaus einen zweiten Schritt des winkelmäßigen Lokalisierens des beweglichen Objekts (1) in einer Ebene im Wesentlichen parallel zur Oberfläche (30) beinhaltet, die die elektromagnetischen Wellen reflektiert, durch Auswählen und Nutzen von wenigstens zwei Signalen (25, 27) mit maximaler Energie, die von wenigstens zwei Empfangspositionen (46) empfangen werden, die sich auf wenigstens zwei unterschiedlichen Spalten befinden.

14. Lokalisierungsverfahren (73) nach dem vorherigen Anspruch, **dadurch gekennzeichnet, dass** eine winkelmäßige Lokalisierung des beweglichen Objekts (1) in einer Ebene im Wesentlichen lotrecht zu der Oberfläche (30), die die elektromagnetischen Wellen reflektiert, unter Verwendung der von jeder Empfangsposition (46) empfangenen Signale (25, 27) benutzt wird.

15. Lokalisierungsverfahren (73) nach einem der Ansprüche 13 oder 14, **dadurch gekennzeichnet, dass** das bewegliche Objekt (1) ein Flugzeug (1) ist.

**Claims**

1.  Location device (40) for a moving object (1) on the approach towards a substantially horizontal surface (30) which reflects electromagnetic waves comprising:

    a transmission antenna (42) which comprises at least two transmission positions (47) which transmit a detection signal (24) in the direction of the moving object (1);
    a reception antenna (41) which comprises at least two columns (43, 44) of at least two reception positions (46), receiving a signal (25, 27) which is re-transmitted by the moving object (1);
    means which are configured in order, a transmission of the detection signal (24) being activated at each transmission position (47), to select a transmission position (47) which has given rise to a detection by the reception antenna (41) of the maximum energy signal (25, 27) which is re-transmitted by the moving object (1), in order to bring about a tracking of the moving object (1);
    said location device (40) being **characterised in that** it comprises means which are configured in order to select and use at least two maximum energy signals (25, 27) which are received by at least two reception positions (46) which are located on at least two different columns, indicating the detection of the moving object (1), for an angular location of the moving object (1) in a plane substantially parallel with the surface (30) reflecting the electromagnetic waves.

2.  Location device (40) according to the preceding claim, **characterised in that** all the reception positions (46) are used for an angular location of the moving object (1) in a plane substantially perpendicular to the surface (30) reflecting the electromagnetic waves.

3.  Location device (40) according to any one of the preceding claims, **characterised in that** the reception antenna (41) comprising a plurality of reception sub-networks (46) comprising radiating elements (45), a reception position (46) corresponding to the position (46) of a fixed reception sub-network (46), the reception sub-networks (46) are activated successively.

4.  Location device (40) according to any one of the preceding claims, **characterised in that**, the transmission antenna (46) comprising a plurality of transmission routes (47), a transmission position (47) corresponding to the position of a fixed transmission route (47), the transmission routes (47) are activated successively.

5.  Location device (40) according to any one of claims 1, 2 and 4, **characterised in that** the reception antenna (41) comprises one or more reception sub-networks (56) which are composed of radiating elements (55) which move at the reception positions (46).

6.  Location device (40) according to claim 5, **characterised in that** the reception sub-network(s) (56) move(s) continuously.

7.  Location device (40) according to any one of claims 1 to 3 and 7, **characterised in that** the transmission antenna (47) comprises one or more transmission routes (47) which move at the transmission positions (47).

8.  Location device (40) according to claim 7, **characterised in that** the transmission route(s) (47) move(s) continuously.

9.  Location device (40) according to any one of the preceding claims, **characterised in that** the reception positions (46) are spaced apart using an irregular spacing law.

10. Location device (40) according to any one of claims 1 to 9, **characterised in that** the reception positions (46) are spaced apart using a progressive spacing law.

11. Location device (40) according to any one of the preceding claims, **characterised in that** the transmission antenna (42) and the reception antenna (41) are co-located.

12. Location device (40) according to any one of the preceding claims, **characterised in that** the moving object (1) is an aircraft (1).

13. Location method (73) for a moving object (1) near a substantially horizontal surface which reflects electromagnetic waves by means of a location device (40) comprising:

a transmission antenna (42) which comprises at least two transmission positions (47) which transmit a detection signal (24) in the direction of the moving object (1);
a reception antenna (41) which comprises at least two columns (43, 44) of at least two reception positions (46), receiving a signal (25, 27) which is re-transmitted by the moving object (1);
the location method comprising at least a first selection step for a transmission position (47) which has given rise to a detection by the reception antenna (41) of the maximum level signal (25, 27) which is re-transmitted by the moving object (1) in order to bring about a tracking of the moving object (1);

**characterised in that** the location method further comprises a second angular location step of the moving object (1) in a plane substantially parallel with the surface (30) reflecting the electromagnetic waves by selecting and using at least two maximum energy signals (25, 27) which are received by at least two reception positions (46) which are located on at least two different columns.

14. Location method (73) according to the preceding claim, **characterised in that** an angular location of the moving object (1) in a plane substantially perpendicular to the surface (30) which reflects the electromagnetic waves is carried out using the signals (25, 27) which are received by each reception position (46).

15. Location method (73) according to any one of claims 13 or 14, **characterised in that** the moving object (1) is an aircraft (1).

FIG.1

FIG.2

FIG.3

FIG.4

EP 2 122 388 B1

FIG.5a

FIG.5b

EP 2 122 388 B1

EP 2 122 388 B1

```
┌──────────────────────────────────────┐
│  ┌────────────────────────┐          │
│  │  Détection présence     │  ⌐ 70   │
│  │  de la cible            │         │
│  └────────────────────────┘          │
│              │                        │
│              ▼                        │
│  ┌────────────────────────┐          │
│  │  Estimation élévation   │  ⌐ 71   │
│  │  de la cible            │         │
│  └────────────────────────┘          │
│              │                        │
│              ▼                        │
│  ┌────────────────────────┐          │
│  │  Estimation azimut de   │  ⌐ 72   │
│  │  la cible               │         │
│  └────────────────────────┘          │
└──────────────────────────────────────┘
                                    └─ 73
```

FIG.6a

FIG.6b

FIG.6c

EP 2 122 388 B1

FIG.6d

EP 2 122 388 B1

**EP 2 122 388 B1**

**RÉFÉRENCES CITÉES DANS LA DESCRIPTION**

**Documents brevets cités dans la description**

- FR 2690755
- FR 0412313